# EUROPEAN PATENT APPLICATION

(11) **EP 4 516 501 A1**
(43) Date of publication of application: **05.03.2025**
(21) Application number: 22940314.2
(22) Date of filing: 13.10.2022
(51) Int. Cl.: B32B 27/00, B32B 27/30, B32B 27/40, E06B 1/26, E06B 1/34, E06B 3/20

(54) **LAMINATE AND SASH**

(30) Priority: 26.04.2022 JP 2022072302
(71) Applicant: DIC Corporation, Tokyo 174-8520 (JP)
(72) Inventor: KOMATSUZAKI, Kunihiko, Takaishi-shi, Osaka 592-0001 (JP)
(74) Representative: Kraus & Lederer PartGmbB
(86) International application number: PCT/JP2022/038150
(87) International publication number: WO 2023/210043

(57) **Abstract**

In the present invention, there is provided a laminate having a substrate, a primer layer, and an adhesive layer, in which the primer layer is formed from a resin composition comprising an urethane resin (A) having a glass transition temperature of 0°C or less and water, and in which the adhesive layer is formed from a moisture-curable polyurethane hot-melt resin composition. Further, in the invention, a sash having a decorative sheet on the adhesive layer of the laminate is provided. The urethane resin (A) preferably uses a polyester polyol as a raw material. The substrate is preferably polyvinyl chloride. The laminate of the invention has excellent adhesive strength.

## Description

### TECHNICAL FIELD

The present invention relates to a laminate and a sash.

### BACKGROUND ART

With respect to the adhesive for building materials, a trend towards environmentally friendly materials is increasingly replacing the adhesive using a solvent material by a moisture-curable polyurethane hot-melt adhesive (see, for example, PTL 1). Under the circumstances, in decorative sheet wrapping processing for a polyvinyl chloride (PVC) sash, a process is employed in which a PVC substrate is treated with the solvent primer currently used, and then laminated on a decorative sheet using a moisture-curable polyurethane hot-melt adhesive, and, with respect to the primer, switching from the solvent system to an aqueous system is strongly desired. However, a primer of a system that exhibits high adhesive strength has not yet been found.

### CITATION LIST

### PATENT LITERATURE

PTL 1: JP2005-232437A

### SUMMARY OF INVENTION

### TECHNICAL PROBLEM

A problem to be solved by the invention( is to provide a laminate having excellent adhesive strength.

### SOLUTION TO PROBLEM

In the invention, there is provided a laminate having a substrate, a primer layer, and an adhesive layer, in which the primer layer is formed from a resin composition containing an urethane resin (A) having a glass transition temperature of 0°C or less and water, and in which the adhesive layer is formed from a moisture-curable polyurethane hot-melt resin composition.

Further, in the invention, a sash having a decorative sheet on the adhesive layer of the laminate is provided.

### ADVANTAGEOUS EFFECTS OF INVENTION

The laminate of the invention has excellent adhesive strength. Particularly, the laminate has excellent adhesive strength even when using polyvinyl chloride (PVC) as a substrate, and can be especially effectively used as a PVC sash.

### DESCRIPTION OF EMBODIMENTS

The laminate of the invention has a substrate, a specific primer layer, and a specific adhesive layer.

As the substrate, for example, there can be used a fiber substrate; a glass substrate; a wooden substrate, such as plywood, MDF (medium density fiberboard), or particle board; a metal substrate; or a resin substrate, such as polyester, nylon, polystyrene, polycarbonate, polyvinyl chloride, an ethylene-vinyl acetate copolymer, polyvinyl alcohol, polyethylene, or polypropylene. In the invention, even when using polyvinyl chloride as the substrate, the laminate has excellent adhesive strength.

The primer layer is formed from a resin composition containing a urethane resin (A) having a glass transition temperature of 0°C or less and water. By using the urethane resin (A) having a glass transition temperature of 0°C or less in the primer, the primer layer is improved in movement upon being laminated on the hot-melt adhesive which is melted, unifying the substrate and the adhesive layer, so that excellent adhesive strength is exhibited. Further, by using a resin composition containing water in the primer layer, the resultant laminate is an environmentally friendly material.

In view of achieving even more excellent adhesive strength, the urethane resin (A) preferably has a glass transition temperature of -50 to 0°C, more preferably -30 to 0°C. The glass transition temperature of the urethane resin (A) indicates a value as measured by DSC in accordance with JIS K7121-1987, specifically indicates a value measured by a method in which a resin composition containing the urethane resin (A) (except a crosslinking agent) is placed in a differential scanning calorimeter apparatus, and the temperature is increased to (Tmg + 50°C) at a temperature increase rate of 10°C/minute, and then maintained for three minutes, followed by rapid cooling, and, from the obtained differential thermal curve, a middle-point glass transition temperature (Tmg) is read.

The urethane resin (A) is capable of being dispersed in water and is, for example, a urethane resin having a hydrophilic group, such as an anionic group, a cationic group, or a nonionic group. These urethane resins (A) may be used alone or in combination of two or more. Of these, in view of the production stability and water dispersion stability, a urethane resin having an anionic group and/or a nonionic group is more preferred.

As a method for obtaining the urethane resin having an anionic group, for example, there can be mentioned a method in which at least one compound selected from the group consisting of a glycol compound having a carboxyl group and a compound having a sulfonyl group is used as a raw material.

As the glycol compound having a carboxyl group, for example, 2,2-dimethylolpropionic acid, 2,2-dimethylolbutanoic acid, 2,2-dimethylolbutyric acid, 2,2-dimethylolpropionic acid, or 2,2-valeric acid can be used. These compounds may be used alone or in combination of two or more.

As the compound having a sulfonyl group, for example, there can be used 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, N-(2-aminoethyl)-β-alanine; or a salt thereof. These compounds may be used alone or in combination of two or more

As a method for obtaining the urethane resin having a nonionic group, for example, there can be mentioned a method in which a compound having an oxyethylene structure is used as a raw material.

As the compound having an oxyethylene structure, for example, there can be used a polyether polyol having an oxyethylene structure, such as polyethylene glycol, polyoxyethylene polyoxypropylene glycol, polyoxyethylene polyoxytetramethylene glycol, or polyethylene glycol dimethyl ether. These compounds may be used individually or in combination. Of these, in view of more easily controlling the hydrophilicity, polyethylene glycol and/or polyethylene glycol dimethyl ether is preferably used.

In view of achieving even more excellent emulsifiability and water dispersion stability, the raw material used for obtaining the urethane resin having a nonionic group preferably has a number average molecular weight in the range of from 200 to 10,000, more preferably in the range of from 300 to 3,000, more preferably in the range of from 300 to 2,000. The number average molecular weight of the raw material used for obtaining the urethane resin having a nonionic group indicates a value as measured by a gel permeation column chromatography (GPC) method.

As a method for obtaining the urethane resin having a cationic group, for example, there can be mentioned a method in which one or two or more compounds having an amino group are used as a raw material.

As the compound having an amino group, for example, there can be used a compound having a primary or secondary amino group, such as triethylenetetramine or diethylenetriamine; or a compound having a tertiary amino group, e.g., an N-alkyldialkanolamine, such as N-methyldiethanolamine or N-ethyldiethanolamine, or an N-alkyldiaminoalkylamine, such as N-methyldiaminoethylamine or N-ethyldiaminoethylamine. These compounds may be used alone or in combination of two or more.

As the urethane resin (A), specifically, for example, a reaction product of a polyol (a1), a polyisocyanate (a2), and, if necessary, a compound (a3) having a hydrophilic group (raw material used for obtaining the urethane resin having an anionic group, urethane resin having a cationic group, and urethane resin having a nonionic group) can be used.

As the polyol (a1), for example, polyether polyol, polyester polyol, polyacrylic polyol, polycarbonate polyol, or polybutadiene polyol can be used. These polyols may be used alone or in combination of two or more. When the urethane resin having a nonionic group is used as the urethane resin (A), a polyol other than the raw material used for obtaining the urethane resin having a nonionic group is used as the polyol (a1). In view of achieving even more excellent adhesive strength, the polyol (a1) is preferably polyester polyol.

In view of the mechanical strength and adhesive strength of the obtained film, the polyol (a1) preferably has a number average molecular weight in the range of from 500 to 100,000, more preferably 800 to 10,000. The number average molecular weight of the polyol (a1) indicates a value as measured by a gel permeation column chromatography (GPC) method.

In view of achieving even more excellent mechanical strength and adhesive strength, the amount of the polyol (a1) used is further preferably 40 to 90% by mass, especially preferably 50 to 80% by mass, based on the total mass of the raw materials constituting the urethane resin (A).

With respect to the polyol (a1), if necessary, a chain extender (a1-1) may be used in combination with the polyol (a1). As the chain extender (a1-1), one having a molecular weight of less than 500 (preferably in the range of 50 to 450) can be used, specifically, there can be used a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain extender having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine, or the like. These chain extenders may be used alone or in combination of two or more. The molecular weight of the chain extender (a1-1) indicates a value determined from the chemical formula.

When using the chain extender (a1-1), in view of achieving even more excellent mechanical strength and adhesive strength, the amount of the chain extender (a1-1) used is further preferably 0.1 to 30% by mass, especially preferably 0.5 to 10% by mass, based on the total mass of the raw materials constituting the urethane resin (A).

As the polyisocyanate (a2), for example, there can be used an aromatic polyisocyanate, such as phenylene diisocyanate, toluene diisocyanate, diphenylmethane diisocyanate, xylylene diisocyanate, naphthalene diisocyanate, polymethylene polyphenyl polyisocyanate, or carbodiimidated diphenylmethane polyisocyanate; or an aliphatic polyisocyanate or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate. These polyisocyanates may be used alone or in combination of two or more.

In view of achieving even more excellent mechanical strength and adhesive strength, the amount of the polyisocyanate (a2) used is further preferably 5 to 40% by mass, especially preferably 10 to 35% by mass, based on the total mass of the raw materials constituting the urethane resin (A).

With respect to the compound (a3) having a hydrophilic group, in view of achieving even more excellent emulsifiability, water dispersion stability, and film forming properties, the amount of the compound (a3) used is further preferably 0.25 to 2% by mass, especially preferably 0.5 to 1.8% by mass, based on the total mass of the raw materials constituting the urethane resin (A).

In view of achieving even more excellent film forming properties, the urethane resin (A) preferably has an average particle diameter in the range of from 0.01 to 1 µm, more preferably in the range of from 0.05 to 0.9 µm. The average particle diameter of the urethane resin (A) indicates a value of an average particle diameter as measured, in terms of the area-based particle diameter, at a relative refractive index of 1.10 using a laser diffraction/scattering-type particle size distribution measurement apparatus ("LA-910", manufactured by Horiba, Ltd.) with respect to the resin composition containing the urethane resin (A) using water as a dispersing medium.

The content of the urethane resin (A) in the resin composition forming the primer layer in the invention is preferably 10 to 90% by mass, more preferably 20 to 70% by mass.

As the water contained in the resin composition, ion-exchanged water, distilled water, or the like can be used. These waters may be used alone or in combination of two or more.

Next, a method for producing the resin composition containing the urethane resin (A) used in the invention is described below.

The method for producing the resin composition used in the invention includes the steps of: reacting the polyol (a1), the polyisocyanate (a2), and the compound (a3) having a hydrophilic group under solventless conditions to obtain an urethane prepolymer (i) having an isocyanate group (hereinafter, referred to simply as "prepolymer step"); and then, dispersing the urethane prepolymer (i) in the above-mentioned water (hereinafter, referred to simply as "emulsion step"); and then reacting the resultant dispersion with the above-mentioned chain extender (a1-1) to obtain an urethane resin (X) (hereinafter, referred to simply as "chain extension step").

As examples of methods for the prepolymer step, there can be mentioned a method in which the reaction is conducted in an organic solvent, such as methyl ethyl ketone or acetone; and a method in which the reaction is conducted under solventless conditions using a reaction vessel having an agitating element; a kneading machine, such as a kneader, a continuous kneader, a taper roll, a single-screw extruder, a twin-screw extruder, a triple-screw extruder, a universal mixing machine, PLASTOMILL, or a Bodeda type kneading machine; a rotary dispersion mixer, such as a TK homomixer, FILMIX, Ebara Milder, CLEARMIX, ULTRA-TURRAX, CAVITRON, or BIO-MIXER; an ultrasonic dispersion machine; an apparatus having no moving part and being capable of mixing a fluid by the flow of the fluid itself, such as an in-line mixer; or the like.

In the prepolymer step, in view of achieving even more excellent adhesive strength and mechanical strength, the molar ratio of the isocyanate group of the polyisocyanate (a2) and a total of the hydroxyl group of the polyol (a1) and the hydroxyl group and amino group of the compound (a3) having a hydrophilic group [isocyanate group/(hydroxyl group and amino group)] is preferably 1.1 to 3, more preferably 1.2 to 2.

The reaction of the prepolymer step is, for example, conducted at 50 to 120°C for 1 to 10 hours.

The chain extension step is a step in which a reaction of the isocyanate group of the urethane prepolymer (i) and the chain extender (a1-1) causes the urethane prepolymer (i) to be increased in molecular weight, obtaining a urethane resin (A).

In the chain extension step, in view of achieving even more excellent adhesive strength and mechanical strength, the molar ratio of a total of the hydroxyl group and amino group of the chain extender (a1-1) and the isocyanate group of the urethane prepolymer (i) [(hydroxyl group and amino group)/isocyanate group] is preferably 0.8 to 1.1, more preferably 0.9 to 1.

The chain extension step can be performed using an apparatus similar to that used in the prepolymer step.

The resin composition contains the urethane resin (A) and water as essential components, but, if necessary, may contain an additional additive.

As the additional additive, for example, a surfactant, a crosslinking agent, an emulsifying agent, a neutralizing agent, a thickener, a urethane forming catalyst, a filler, a pigment, a dye, a flame retardant, a leveling agent, or an anti-blocking agent can be used. These additives may be used alone or in combination of two or more.

The adhesive layer is formed from a moisture-curable polyurethane hot-melt resin composition in view of being solventless and environmentally friendly and achieving excellent adhesive strength.

With respect to the moisture-curable polyurethane hot-melt resin composition, for example, there can be mentioned a resin composition containing a urethane prepolymer having an isocyanate group, which is a reaction product of a polyol (X) and a polyisocyanate (Y).

As the polyol (X), for example, a polyester polyol, a polycarbonate polyol, or a polyether polyol can be used. These polyols may be used alone or in combination of two or more. Of these, particularly, in view of obtaining even more excellent adhesive strength with a polyvinyl chloride substrate, a polyester polyol is preferred. The content of the polyester polyol in the polyol (X) is preferably 50% by mass or more, more preferably 70% by mass or more.

As the polyester polyol, for example, there can be used a long-chain crystalline polyester polyol (x1), an aliphatic polyester polyol (x2) other than the long-chain crystalline polyester polyol (x1), which uses a glycol having a 2,2-dimethyl-1,3-propylene group as a raw material, an aromatic polyester polyol (x3), or a non-crystalline polyester polyol other than the above polyester polyols. These polyester polyols may be used alone or in combination of two or more. Of these, in view of even more excellent adhesive strength with a polyvinyl chloride substrate, at least one polyester polyol selected from the group consisting of the long-chain crystalline polyester polyol (x1), aliphatic polyester polyol (x2), and aromatic polyester polyol (x3) is preferred, and it is more preferred to use the three components in combination.

As the long-chain crystalline polyester polyol (x1), for example, a reaction product of a compound having a hydroxyl group and a polybasic acid can be used. In the invention, the term "crystalline" means that a peak of heat of crystallization or heat of melting can be found in the DSC (differential scanning calorimeter) measurement conducted in accordance with JIS K7121:2012, and the term "non-crystalline" means that the above-mentioned peak cannot be found.

As the compound having a hydroxyl group, for example, ethylene glycol, propylene glycol, butanediol, pentanediol, hexanediol, heptanediol, octanediol, nonanediol, decanediol, trimethylolpropane, trimethylolethane, or glycerol can be used. These compounds may be used alone or in combination of two or more. Of these, in view of improving the crystalline properties to achieve even more excellent adhesive strength, at least one selected from the group consisting of butanediol, hexanediol, octanediol, and decanediol is preferably used.

As the polybasic acid, for example, oxalic acid, malonic acid, succinic acid, adipic acid, sebacic acid, azelaic acid, or dodecanedioic acid can be used. These compounds may be used alone or in combination of two or more. Of these, in view of achieving even more excellent adhesive strength, at least one selected from the group consisting of adipic acid, sebacic acid, and dodecanedioic acid is preferably used.

In view of achieving even more excellent adhesive strength, the long-chain crystalline polyester polyol (x1) preferably has a number average molecular weight of 500 to 10,000, more preferably 1,000 to 7,000. The number average molecular weight of the crystalline polyester polyol (x1) indicates a value as measured by a gel permeation chromatography (GPC) method.

When the long-chain crystalline polyester polyol (x1) is used, in view of achieving even more excellent adhesive strength, the amount of the long-chain crystalline polyester polyol (x1) used is preferably 32 to 40% by mass, more preferably 33 to 37% by mass, based on the total mass of the polyol (X) and the polyisocyanate (Y).

The aliphatic polyester polyol (x2) is other than the long-chain crystalline polyester polyol (x1), and uses a glycol having a 2,2-dimethyl-1,3-propylene group as a raw material.

Further, with respect to the aliphatic polyester polyol (a2), in view of achieving excellent adhesive strength, it is further preferred that an aliphatic polyester polyol (x2-1) having a number average molecular weight of 1,000 to 3,000 and an aliphatic polyester polyol (x2-2) having a number average molecular weight of 5,000 to 9,000 are used in combination, and, when the aliphatic polyester polyols (x2-1) and (x2-2) are used in combination, the mass ratio [(x2-1)/(x2-2)] is preferably 1 to 3. When employing the above-mentioned constitution, the glass transition temperature of the whole of the aliphatic polyester polyols and the viscosity are increased, and therefore very excellent adhesive strength particularly to polyvinyl chloride can be achieved.

With respect to the aliphatic polyester polyol (x2-1) and the aliphatic polyester polyol (x2-2), there can be used a reaction product of a compound having a hydroxyl group and containing a glycol having a 2,2-dimethyl-1,3-propylene group as an essential component and a polybasic acid.

As the glycol having a 2,2-dimethyl-1,3-propylene group, for example, there can be mentioned neopentyl glycol, a dimer thereof, and a trimer thereof. These compounds may be used alone or in combination of two or more. Of these, in view of achieving even more excellent adhesive strength, neopentyl glycol is preferred.

With respect to the glycol having a 2,2-dimethyl-1,3-propylene group, the amount of the glycol used is preferably 10% by mass or more, preferably 10 to 20% by mass, based on the total mass of the compounds having a hydroxyl group.

With respect to the usable compound having a hydroxyl group other than the glycol having a 2,2-dimethyl-1,3-propylene group, for example, there can be used ethylene glycol, diethylene glycol, propylene glycol, dipropylene glycol, butanediol, pentanediol, hexanediol, heptanediol, octanediol, nonanediol, decanediol, cyclohexanedimethanol, bisphenol A, bisphenol F, an alkylene oxide addition product thereof, triethylene glycol, trimethylolpropane, trimethylolethane, or glycerol.

As the polybasic acid, for example, oxalic acid, malonic acid, succinic acid, adipic acid, sebacic acid, azelaic acid, or dodecanedioic acid can be used. These compounds may be used alone or in combination of two or more.

In view of achieving even more excellent adhesive strength, the aliphatic polyester polyol (x2-1) preferably has a number average molecular weight of 1,500 to 2,500, and the aliphatic polyester polyol (x2-2) preferably has a number average molecular weight of 6,000 to 8,000. The number average molecular weight of the aliphatic polyester polyol (x2-1) and aliphatic polyester polyol (x2-2) indicates a value as measured by a gel permeation chromatography (GPC) method.

Further, in view of achieving even more excellent adhesive strength, the mass ratio of the aliphatic polyester polyol (x2-1) to the aliphatic polyester polyol (x2-2) [(x2-1)/(x2-2)] is more preferably 1 to 2.5.

When the aliphatic polyester polyol (x2) is used, in view of achieving even more excellent adhesive strength, the total amount of the polyester polyols used is preferably 15 to 38% by mass, more preferably 20 to 37% by mass, based on the total mass of the polyol (X) and the polyisocyanate (Y).

As the aromatic polyester polyol (x3), for example, there can be used a reaction product of a compound having a hydroxyl group and a polybasic acid containing an aromatic polybasic acid; a reaction product of an aromatic compound having two or more hydroxyl groups and a polybasic acid; or a reaction product of an aromatic compound having two or more hydroxyl groups and a polybasic acid containing an aromatic polybasic acid.

As the compound having a hydroxyl group, for example, there can be used an aliphatic compound, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, diethylene glycol, triethylene glycol, triethylene glycol, tetraethylene glycol, neopentyl glycol, 1,2-butanediol, 1,3-butanediol, 2-methyl-1,3-propanediol, 2,2-diethyl-1,3-propanediol, 3-methyl-1,5-pentanediol, 2-ethyl-2-butyl-1,3-propanediol, 2-methyl-1,8-octanediol, 2,4-diethyl-1,5-pentanediol, trimethylolethane, trimethylolpropane, or pentaerythritol; or an alicyclic compound, such as cyclopentanediol, cyclohexanediol, cyclohexanedimethanol, hydrogenated bisphenol A, or an alkylene oxide addition product thereof. These compounds may be used alone or in combination of two or more.

As the aromatic compound having two or more hydroxyl groups, for example, bisphenol A, bisphenol F, or an alkylene oxide (such as ethylene oxide, propylene oxide, or butylene oxide) addition product thereof can be used. These compounds may be used alone or in combination of two or more.

As the aromatic polybasic acid, for example, phthalic acid, isophthalic acid, terephthalic acid, or phthalic anhydride can be used. As the other polybasic acid, for example, oxalic acid, malonic acid, succinic acid, adipic acid, sebacic acid, azelaic acid, or 1,12-dodecanedicarboxylic acid can be used. These polybasic acids may be used alone or in combination of two or more. With respect to the aromatic polybasic acid, in view of achieving even more excellent adhesive strength,

As the other polybasic acid, for example, succinic acid, adipic acid, pimelic acid, suberic acid, azelaic acid, sebacic acid, decanedioic acid, dodecanedioic acid, eicosanedioic acid, citraconic acid, itaconic acid, citraconic anhydride, or itaconic anhydride can be used.

With respect to the aromatic polyester polyol (x3), in view of achieving even more excellent adhesive strength, preferred is a polyester polyol using as a raw material at least one phthalic acid compound selected from the group consisting of phthalic acid, isophthalic acid, terephthalic acid, and phthalic anhydride.

In view of achieving even more excellent adhesion, the aromatic polyester polyol (x3) preferably has a number average molecular weight of 500 to 10,000, more preferably 1,000 to 5,000. The number average molecular weight of the aromatic polyester polyol (x3) indicates a value as measured by a gel permeation chromatography (GPC) method.

In view of achieving even more excellent adhesive strength, the amount of the aromatic polyester polyol (x3) used is preferably 15 to 35% by mass, more preferably 18 to 32% by mass, based on the total mass of the polyol (X) and the polyisocyanate (Y).

As the polyisocyanate (Y), for example, there can be used an aromatic polyisocyanate, such as polymethylene polyphenyl polyisocyanate, diphenylmethane diisocyanate, carbodiimide-modified diphenylmethane diisocyanate, xylylene diisocyanate, phenylene diisocyanate, toluene diisocyanate, or naphthalene diisocyanate; or an aliphatic or alicyclic polyisocyanate, such as hexamethylene diisocyanate, cyclohexane diisocyanate, isophorone diisocyanate, dicyclohexylmethane diisocyanate, or tetramethylxylylene diisocyanate. These polyisocyanates may be used alone or in combination of two or more. Of these, in view of achieving even more excellent adhesive strength, an aromatic polyisocyanate is preferred, and diphenylmethane diisocyanate is more preferred.

The urethane prepolymer is obtained by reacting the polyol (X) and the polyisocyanate (Y), and has an isocyanate group capable of reacting with water present in air or in a substrate, to which the moisture-curable polyurethane hot-melt resin composition is applied, to form a crosslinked structure.

The urethane prepolymer can be produced by a method in which, for example, the polyisocyanate (Y) is placed in a reaction vessel containing therein the polyol (X) and a reaction is conducted under conditions such that the amount of the isocyanate group of the polyisocyanate (Y) is excess with respect to the amount of the hydroxyl group of the polyol (X).

When producing the urethane prepolymer, in view of achieving even more excellent adhesive strength, the equivalent ratio of the isocyanate group of the polyisocyanate (Y) to the hydroxyl group of the polyol (X) [NCO/OH] is preferably 1.5 to 4, more preferably 1.8 to 3.0.

With respect to the isocyanate group content (hereinafter, referred to simply as "NCO%") of the urethane prepolymer obtained by the above-mentioned method, in view of achieving even more excellent adhesive strength, the NCO% is preferably 1 to 6% by mass, more preferably 2 to 4% by mass. The NCO% of the hot-melt urethane prepolymer indicates a value as measured by a potentiometric titration method in accordance with JIS K1603-1:2007.

The moisture-curable polyurethane hot-melt resin composition used in the invention preferably comprises the urethane prepolymer, and, if necessary, may further use an additional additive.

As the additional additive, for example, a light stabilizer, a curing catalyst, a plasticizer, a stabilizer, a filler, a dye, a pigment, carbon black, a vehicle, a fluorescent brightener, a silane coupling agent, wax, or a thermoplastic resin can be used. These additives may be used alone or in combination of two or more.

The above-described laminate of the invention has excellent adhesive strength. Particularly, the laminate has excellent adhesive strength even when using polyvinyl chloride (PVC) as a substrate, and can be especially effectively used as a PVC sash.

With respect to the constitution of the PVC sash, for example, there can be mentioned a sash having polyvinyl chloride as the substrate, the primer layer, the adhesive layer, and a decorative sheet, such as woodgrained decorative paper, on the adhesive layer.

As a method for producing the PVC sash, for example, there can be mentioned a method in which a resin composition forming the primer layer is applied onto a PVC substrate, and dried ,and then, the above-mentioned moisture-curable polyurethane hot-melt resin composition is applied onto a decorative sheet, and the resultant substrate and sheet are laminated together and subjected to aging.

As a method for applying the resin composition and the moisture-curable polyurethane hot-melt resin composition, for example, a roll coater, a spray coater, a T-die coater, a knife coater, or a comma coater can be used.

The thickness of the primer layer is, for example, 0.5 to 20 µm, and the thickness of the adhesive layer is, for example, 20 to 150 µm.

Conditions for aging after the above-mentioned lamination can be appropriately selected from, for example, those at a temperature of 20 to 50°C and at a relative humidity of 40 to 90% RH for 0.5 to 5 days.

### EXAMPLES

Hereinbelow, the invention will be described in more detail with reference to the following Examples.

### [Synthesis Example 1] Method for producing a resin composition <P1> for forming a primer layer

In a vessel equipped with a thermometer, a nitrogen gas introducing pipe, and a stirrer and having purged with nitrogen gas, 155 parts by mass of 1,6-hexanediol (hereinafter, abbreviated to "HG"), 137 parts by mass of neopentyl glycol, and 424 parts by mass of adipic acid were placed and melted at 120°C. Then, while stirring, the temperature of the resultant mixture was increased to 220°C over 3 to 4 hours and maintained for 5 hours, and then, after cooled to 150°C, 88 parts by mass of 2,2-dimethylolpropionic acid (hereinafter, abbreviated to "DMPA") was added and the resultant mixture was maintained at 150°C for 5 to 10 hours while stirring, and then 300 parts by mass of methyl ethyl ketone was added, to prepare a methyl ethyl ketone solution (P1-A) of a polyester polyol having a carboxyl group, which has a nonvolatile content of 70% by mass.

In a vessel being equipped with a thermometer, a nitrogen gas introducing pipe, and a stirrer and having purged with nitrogen gas, in the presence of 198 parts by mass of the methyl ethyl ketone solution of the polyester polyol (P1-A) having a carboxyl group, 160 parts by mass of polyester polyol ("CRISVON CMA-654", manufactured by DIC Corporation; number average molecular weight: 1,500), 19 parts by mass of HG, 75 parts by mass of toluene diisocyanate, and 152 parts by mass of methyl ethyl ketone, a reaction was conducted at 70°C until the NCO% of the reaction product reached the predetermined NCO%, to obtain a methyl ethyl ketone solution of a urethane prepolymer having an isocyanate group at the end thereof.

Then, 17.2 parts by mass of triethylamine as a neutralizing agent was added to the organic solvent solution of the urethane prepolymer and stirred, and further 653 parts by mass of water and 7.7 parts by mass of piperazine were added and the resultant mixture was subjected to chain extension reaction to obtain a water dispersion of a urethane resin. Then, the water dispersion was subjected to desolvation, to obtain a resin composition (P1) for forming a primer layer, having a nonvolatile content of 40% by mass. The obtained urethane resin had a glass transition temperature of -30°C.

### [Synthesis Example 2] Method for producing a resin composition <P2> for forming a primer layer

To 100 parts by mass of the resin composition (P1)for forming a primer layer were added 2 parts by mass of a silane coupling agent (Shin-Etsu Silicone "KBM-403", manufactured by Shin-Etsu Chemical Co., Ltd.) and 5 parts by mass of water, to obtain a resin composition (P2) for forming a primer layer of 40% by mass.

### [Comparative Synthesis Example 1] Method for producing a resin composition <RP1> for forming a primer layer

While introducing nitrogen gas, into a reaction vessel equipped with a thermometer, a nitrogen gas introducing pipe, and a stirrer were charged 33.3 parts by mass of isophthalic acid, 16.7 parts by mass of sebacic acid, 7.3 parts by mass of adipic acid, 6 parts by mass of ethylene glycol, 11.0 parts by mass of 1,6-hexanediol, and 22.5 parts by mass of neopentyl glycol, and the resultant mixture was subjected to polycondensation reaction at 230°C for 24 hours until the acid value became 1 or less at 180 to 230°C, and cooled to 90°C or lower, and 20.4 parts by mass of methyl ethyl ketone was added and mixed, to obtain an aromatic polyester polyol (RP1-A).

In a reaction vessel, 207 parts by mass of the aromatic polyester polyol (RP1-A), 7.4 parts by mass of 1,4-butanediol, and 17.0 parts by mass of methyl ethyl ketone were placed and uniformly mixed by stirring. Then, 14.7 parts by mass of DMPA was added, and then 46.8 parts by mass of toluene diisocyanate was added, and the resultant mixture was subjected to reaction at 70°C for 12 hours, and thus a urethane forming step was performed. After confirming that the isocyanate value had become 0.1% or less, 97 parts by mass of methyl ethyl ketone and 0.7 parts by mass of 1,3-butanediol were added to obtain an organic solvent solution of a urethane prepolymer. Then, 11.6 parts by mass of triethylamine as a neutralizing agent was added to the organic solvent solution of the urethane prepolymer and stirred, and further 1,000 parts by mass of water was added and mixed to obtain a water dispersion of a urethane resin. Then, the water dispersion was subjected to desolvation, to obtain a resin composition (RP1) for forming a primer layer, having a nonvolatile content of 23% by mass. The obtained urethane resin had a glass transition temperature of 5°C.

### [Comparative Synthesis Example 2] Method for producing a resin composition <RP2> for forming a primer layer

While introducing nitrogen gas, into a reaction vessel equipped with a thermometer, a nitrogen gas introducing pipe, and a stirrer were charged 29.3 parts by mass of isophthalic acid, 29.3 parts by mass of terephthalic acid, 13 parts by mass of ethylene glycol, and 22.3 parts by mass of diethylene glycol, and the resultant mixture was subjected to polycondensation reaction at 230°C for 24 hours until the acid value became 1 or less at 180 to 230°C, and cooled to 90°C or lower, then 26.3 parts by mass of methyl ethyl ketone was added and mixed, to obtain an aromatic polyester polyol (RP2-A).

In a reaction vessel, 226 parts by mass of the aromatic polyester polyol (RP2-A) and 40.0 parts by mass of methyl ethyl ketone were placed and uniformly mixed by stirring. Then, 13 parts by mass of 2,2-dimethylolpropionic acid was added, and then 44.3 parts by mass of isophorone diisocyanate and 0.2 parts by mass of tin(II) octylate were added, and the resultant mixture was subjected to reaction at 70°C for 12 hours, thus a urethane forming step was performed. After confirming that the isocyanate value had become 0.1% or less, 25 parts by mass of methyl ethyl ketone and 0.4 parts by mass of methanol were added to obtain an organic solvent solution of a urethane prepolymer.

Then, 7.1 parts by mass of aqueous ammonia as a neutralizing agent was added to the organic solvent solution of the urethane prepolymer and stirred, further 877 parts by mass of water was added and mixed to obtain a water dispersion of a urethane resin. Then, the water dispersion was subjected to desolvation, to obtain a resin composition (RP-2) for forming a primer layer, having a nonvolatile content of 22% by mass. The obtained urethane resin had a glass transition temperature of 50°C.

### [Synthesis Example 3] Moisture-curable polyurethane hot-melt resin composition <PUR1> for forming an adhesive layer

Into a four-necked flask equipped with a thermometer, a stirrer, an inert gas introducing inlet, and a reflux condenser were charged 34 parts by mass of a long-chain crystalline polyester polyol (reaction product of 1,6-hexanediol and dodecanedioic acid; number average molecular weight: 3,500; hereinafter, referred to simply as "crystalline PEs (1)"), 10 parts by mass of an aliphatic polyester polyol (reaction product of diethylene glycol, neopentyl glycol, 1,6-hexanediol, and adipic acid; number average molecular weight: 2,000; the amount of the neopentyl glycol used, based on the total mass of the glycols: 14% by mass; hereinafter, referred to simply as "aliphatic PEs (1)"), 10 parts by mass of an aliphatic polyester polyol (reaction product of diethylene glycol, neopentyl glycol, 1,6-hexanediol, and adipic acid; number average molecular weight: 7,000; the amount of the neopentyl glycol used, based on the total mass of the glycols: 14% by mass; hereinafter, referred to simply as "aliphatic PEs (2)"), and 30 parts by mass of an aromatic polyester polyol (reaction product of neopentyl glycol and orthophthalic acid; number average molecular weight: 2,000; hereinafter, referred to simply as "aromatic PEs (1)"), and the resultant mixture was dehydrated by heating at 100°C under a reduced pressure until the water content in the flask became 0.05% by mass. The mixture in the flask was cooled to 90°C, and then 16 parts by mass of 4,4'-diphenylmethane diisocyanate (hereinafter, abbreviated to "MDI"), which had been melted at 70°C, was added, and the resultant mixture was subjected to reaction in a nitrogen gas atmosphere at 110°C for about 2 hours until the NCO% became constant, to obtain a moisture-curable polyurethane hot-melt resin composition <PUR1> for forming an adhesive layer, which contains a urethane prepolymer.

### [Synthesis Example 4] Moisture-curable polyurethane hot-melt resin composition <PUR2> for forming an adhesive layer

Into a four-necked flask equipped with a thermometer, a stirrer, an inert gas introducing inlet, and a reflux condenser were charged 34 parts by mass of crystalline PEs (1), 20 parts by mass of aliphatic PEs (1), 10 parts by mass of aliphatic PEs (2), and 20 parts by mass of aromatic PEs (1), and the resultant mixture was dehydrated by heating at 100°C under a reduced pressure until the water content in the flask became 0.05% by mass. The mixture in the flask was cooled to 90°C, and then 16 parts by mass of MDI, which had been melted at 70°C, was added, and the resultant mixture was subjected to reaction in a nitrogen gas atmosphere at 110°C for about 2 hours until the NCO% became constant, to obtain a moisture-curable polyurethane hot-melt resin composition <PUR2> for forming an adhesive layer, which contains a urethane prepolymer (i-2).

### [Example 1]

The resin composition <P1> for forming a primer layer obtained in Synthesis Example 1 was applied onto a polyvinyl chloride substrate by a roller so that the dried composition had a thickness of 3 µm, and dried in a dryer at 60°C for 10 minutes. Then, the moisture-curable polyurethane hot-melt resin composition <PUR1> for forming an adhesive layer obtained in Synthesis Example 3, which had been melted at 120°C for one hour, was applied onto a decorative sheet so as to have a thickness of 50 µm, and the sheet and the primer layer were laminated together. The resultant laminate was subjected to aging in an environment at 23°C and at a humidity of 50% for 48 hours, to obtain a PVC laminate.

### [Examples 2 and 3 and Comparative Examples 1 to 3]

A PVC laminate was obtained in substantially the same manner as in Example 1 except that the type of the primer layer-forming resin composition used was changed as shown in Tables 1 and 2.

### [Measurement method of number average molecular weight and weight average molecular weight]

The number average molecular weight of the polyols used in the Synthesis Examples and Comparative Synthesis Examples indicates a value measured by a gel permeation column chromatography (GPC) method under the conditions shown below.

### Measuring apparatus: High-speed GPC apparatus ("HLC-8220GPC", manufactured by Tosoh Corp.)

Columns: The columns shown below, manufactured by Tosoh Corp., which are connected in series were used.
   "TSKgel G5000" (7.8 mm I.D. x 30 cm) x 1
   "TSKgel G4000" (7.8 mm I.D. x 30 cm) x 1
   "TSKgel G3000" (7.8 mm I.D. x 30 cm) x 1
   "TSKgel G2000" (7.8 mm I.D. x 30 cm) x 1
Detector: RI (differential refractometer)
Column temperature: 40°C
Eluent: Tetrahydrofuran (THF)
Flow rate: 1.0 mL/minute
Sample amount per injection: 100 µL (tetrahydrofuran solution having a sample concentration of 0.4% by mass)
Standard sample: A calibration curve was prepared using the standard polystyrenes shown below.

### (Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

### [Evaluation method of adhesive strength]

### (1) 180-Degree peeling test

The PVC laminates obtained in the Examples and Comparative Examples were individually cut into a test specimen having a width of 1 inch, and the specimen was subjected to peeling in the 180-degree direction, and a strength was measured using Autograph ("AG-1", manufactured by Shimadzu Corporation), and evaluated in accordance with the following criteria.
"A": 40 N/inch or more
"B": Other than the above

### (2) Heat creep test

The PVC laminates obtained in the Examples and Comparative Examples were individually cut into a test specimen having a width of 1 inch, and a load of 500 g/inch was applied to the specimen in a dryer at 60°C, and a distance of movement after 24 hours, or a period of time until a distance of movement reached 40 mm and the specimen fell was measured.
"A": 5 mm or less
"B": Other than the above

**[Table 1]**

| Table 1 | Example 1 | Example 2 | Example 3 |
|---|---|---|---|
| Type of resin composition for forming primer layer | P1 | P2 | P1 |
| Glass transition temperature (°C) of urethane resin (A) | -30 | -30 | -30 |
| Moisture-curable polyurethane hot-melt resin composition for forming adhesive layer | PUR1 | PUR1 | PUR2 |
| Evaluation of 180-degree peeling test (N/inch) | 60 | 60 | 60 |
| Evaluation of heat creep test | 0 mm | 0 mm | 0 mm |

**[Table 2]**

| Table 2 | Comparative Example 1 | Comparative Example 2 | Comparative Example 3 |
|---|---|---|---|
| Type of resin composition for forming primer layer | RP1 | RP2 | None |
| Glass transition temperature (°C) of urethane resin (A) | 5 | 50 | |
| Moisture-curable polyurethane hot-melt resin composition for forming adhesive layer | PUR1 | PUR1 | PUR1 |
| Evaluation of 180-degree peeling test (N/inch) | 50 | 60 | 60 |
| Evaluation of heat creep test | Fall after 4 hours | Immediately fall | Fall after 1.5 hours |

It was found that Examples 1 to 3, which are the laminate of the invention, exhibited excellent adhesive strength.

In contrast, Comparative Examples 1 and 2, each of which corresponds to an embodiment in which the glass transition temperature of the urethane resin used in the primer layer is more than the range defined in the invention, had poor adhesive strength.

Comparative Example 3, which corresponds to an embodiment in which the laminate has no primer layer, had poor adhesive strength.

## Claims

1. A laminate having a substrate, a primer layer, and an adhesive layer,
wherein the primer layer is formed from a resin composition comprising a urethane resin (A) having a glass transition temperature of 0°C or less and water, and
wherein the adhesive layer is formed from a moisture-curable polyurethane hot-melt resin composition.

2. The laminate according to claim 1, wherein the urethane resin (A) uses a polyester polyol as a raw material.

3. The laminate according to claim 1, wherein the substrate is polyvinyl chloride.

4. A sash having a decorative sheet on the adhesive layer of the laminate according to claim 3.
